# EUROPEAN PATENT APPLICATION

(11) **EP 4 628 520 A1**
(43) Date of publication of application: **08.10.2025**
(21) Application number: 24382351.5
(22) Date of filing: 05.04.2024
(51) Int. Cl.: C08G 18/44, C09D 175/04, C08G 18/10, C08G 18/32, C08G 18/73, C08G 18/79, F03D 1/00, C09D 175/06

(54) **LEADING EDGE PROTECTION (LEP) COATING COMPOSITION AND USES THEREOF**

(71) Applicant: Aerox Advanced Polymers, SL., 46185 La Pobla de Vallbona (ES)
(72) Inventor: SAKALYTE, Asta, 09114 Vilnius (LT); CANO GONZÁLEZ, Laida, 20013 San Sebastian (ES); CORTÉS FIBLA, Raúl, 46185 La Pobla de Vallbona (ES)
(74) Representative: Elzaburu S.L.P.

(57) **Abstract**

The current invention relates to a Leading Edge Protection (LEP) coating composition characterized by comprising a curable polyurethane material, wherein said polyurethane material is a solvent-free two component polyurethane material comprising: Component A comprising at least 10% by weight of biobased carbon polycarbonate diol in respect of the total weight of Component A, calculated according to method C14 using ASTM D6866; and one or more additives wherein the total quantity of additives is in the range of 5-15% by weight in the respect of the weight of the total Component A; and Component B comprising an aliphatic isocyanate with an isocyanate (-NCO) content between 10 - 25%; and uses thereof.

## Description

### FIELD OF THE INVENTION

The current invention relates to a polyurethane Leading Edge Protection (LEP) coating composition, with biobased materials, to its use improving the erosion resistance, preferably for leading edge protection (LEP) for wind turbine blades.

### BACKGROUND OF THE INVENTION

The two critical materials science challenges of the development of wind energy now are the necessity to prevent the degradation of wind turbine blades for several decades, and, on the other side, to provide a solution for the recyclability and sustainability of the blades.

Currently, wind turbines are recyclable up to 85%. Roughly two thirds of the remaining 15% come from composite materials. At end of their life, due to the current blade material, the amount of waste coming from wind turbine blades is expected to reach 43 million tons globally in 2050.

The solution for this problem includes the development of new recycling (e.g., pyrolysis, solvolysis) technologies, new wind turbine blade materials (like thermoplastic based, vitrimer based, or natural material-based blades), but also the development of disassemble blades, with detachable parts, which can be reused.

The Leading Edge Protection (LEP) of a wind turbine blade is the front edge that faces the oncoming wind. It is the first part of the blade that the wind hits, and it is designed to slice through the air with minimal resistance, allowing the blade to capture the maximum amount of energy from the wind. The shape and curvature of the leading edge of a wind turbine blade are carefully designed to optimize the blade's performance, and even small changes in the design can have a big impact on the turbine's efficiency.

A Leading Edge Protection (LEP) system can include various measures such as coatings, tapes, films, shells or inserts that cover a substrate of the leading edge to prevent damage from impacts, erosion, or weathering. The goal of these materials is to prolong the lifespan of the blade and minimize the need for repairs or replacement, which can be costly and time-consuming. Coating, tape, film, shell material validation is a crucial aspect of ensuring the reliability and longevity of wind turbine blades, particularly in the case of the blade leading edges.

Wind turbine blade maintenance is very expensive to perform depending on the extent of the damage, the size of the turbine, and location, repair materials, labor costs, and any associated downtime or lost revenue.

Therefore, it is essential for the wind turbine manufacturers ensure that the Leading Edge Protection (LEP) can provide sufficient protection.

Coatings for the onshore wind turbine blades are used often due to easier application compared to tapes or prefabricated shells. For offshore wind blades typically, shells are used. These shells can provide good rain erosion resistance, but they are expensive, and their shapes must be prefabricated. Another issue, which shell are facing is lack of adhesive and delamination during its service.

There are several patents for polyurethane based coatings, which could provide good rain erosion resistance and this way protect the leading edge of the blade.

Document US2017152398A1 relates to two-component coating compositions and to coatings produced from them. The present invention also relates to a method for producing these coatings, and to the use of the coating composition for producing coatings. The present invention relates not least to the use of the coating compositions for improving erosion resistance. This document describes a two-component coating composition comprising (1) a paint base component comprising (A) at least one polycarbonate diol, (B) at least one diamine having secondary amino groups and having an aliphatic group (b1) between the nitrogen atoms of the amino groups, and also (2) a hardener component comprising (C) at least one polyisocyanate-modified polyester having an isocyanate content of 4% to 15%. The use of amines can form other compound, polyurea, instead of polyurethane linkage, reducing the efficiency of the process. Also, amines can be an expensive material and, even, some of them can be toxic for environment.

Document WO2020089296A1 relates to a polyurethane elastomer composition comprising a polycarbonate diol and an aliphatic isocyanate, and lacking any solvent, as well as to the use of said composition for Leading Edge Protection (LEP), preferably of wind turbine rotor blades.

Furthermore, the two critical materials science challenges of the development of wind energy now are the necessity to prevent the degradation of wind turbine blades for several decades, and, on the other side, to provide a solution for the recyclability and sustainability of blades. This protection would improve suitability of the blade, thus providing longevity for the blade.

### SUMMARY OF THE INVENTION

The current invention refers to a polyurethane material with improved recyclability and rain erosion resistance, providing a more sustainable solution.

In a first aspect, the current invention refers to a Leading Edge Protection (LEP) coating composition comprising a curable polyurethane material. Specifically, said polyurethane material comprises a two-component polyurethane mixture comprising a polycarbonate diol, Component A, which contains some percentage of biobased carbon and an aliphatic isocyanate, Component B. In addition, said polyurethane material lacks any solvent.

Explicitly, the component A comprises more than 10% by weight of biobased carbon polycarbonate diol, being the biobased carbon content calculated according to method C14 using ASTM D6866.

The Component A further comprises one or more additives selected from: one or more thixotropic agents, one or more catalyst, one or more UV filter, one or more moisture scavengers, one or more antifoaming agents, one or more inorganic fillers, and one or more pigments; wherein the total quantity of additives is in the range of 5 -15% by weight in the respect of the weight of the total component A. Using additives may modify at least one feature of the final composition. For instance, including a catalyst may generate a faster curing process, meanwhile, a thixotropic agent may be used to achieve a desired viscosity.

On the other hand, Component B comprises an aliphatic isocyanate with an isocyanate (-NCO) content between 10 - 25%, in respect of the aliphatic isocyanate.

Biobased materials refer to products that consist of a substance (or substances) derived from living matter (biomass) and either occur naturally or are synthesized, or it may refer to products made by processes that use biomass. Biobased materials are perceived as potentially greener alternatives than their petroleum-based counterparts. As they are derived from renewable raw materials such as plants, bio-based products can help reduce CO₂ and offer other advantages such as lower toxicity or novel product characteristics. In other words, 15% by weight of biobased carbon polycarbonate diol can be achieved, for instance, using 30% by weight of biobased polycarbonate diol composed of 50% of biobased carbon content calculated according to method C14 using ASTM D6866.

In a second aspect, the current invention describes the use of the previous Leading Edge Protection (LEP) coating composition for improving the erosion resistance of substrates.

In other aspect, the invention describes a kit comprising a first cartridge or container comprising a quantity of Component A, and a second cartridge or container comprising a quantity of Component B. This kit allows a user to apply the coating composition over a substrate by mixing the component A and B with a mixing gun.

In other aspect of the invention, a Leading Edge Protection (LEP) system is described. Said Leading Edge Protection system comprises the coating composition previously described, as a layer, cured over a substrate.

In other aspect, a method for preparing a Leading Edge Protection (LEP) coating composition as previous described. According to this invention, the method comprises the step of providing Component A and Component B, and mixing the Component A and the Component B, in a ratio by weight in the range 100:100 - 100:30.

Additionally, said method may continue to manufacture a Leading Edge Protection (LEP). In this sense, a method for manufacturing a leading-edge protection system comprising the steps of providing a curable coating composition; applying said curable coating composition on a substrate; and curing the curable coating composition is described.

Finally, a wind turbine blade comprising said Leading Edge Protection (LEP) system is described. Said wind turbine comprises the leading edge protection on at least a part of the outer surface.

In contrast with other previous solution, the wind turbine blade according to the current invention, comprising the coating composition as a layer of the Leading Edge Protection system on at least a part of the outer surface, has improved RET resistance.

In other words, the current invention, comprising biobased Component A as previously described, prevents the degradation of wind turbine blades, increasing the durability of the lifespan of this product. Additionally, since the coating composition comprises biobased Components, the recyclability of the product has been increased. Furthermore, the sustainability of a wind turbine blade according to this invention has been highly increased.

### DETAILED DESCRIPTION OF THE INVENTION

In a first aspect, the invention refers to a Leading Edge Protection (LEP) coating composition comprising a curable polyurethane material. Said polyurethane material is a solvent-free two-component polyurethane material comprising:
a) Component A comprising:
   - a Biobased carbon polycarbonate diol, at least 10% by weight in respect of the total weight of the mixture, calculated according to method C14 using ASTM D6866, and
   - one or more additives selected from:
      ∘ one or more thixotropic agents, preferably between 5 - 8% by weight,
      ∘ one or more catalyst, preferably between 0.25 - 3% by weight,
      ∘ one or more UV filter, preferably between 0.5 - 3 % by weight,
      ∘ one or more moisture scavengers, preferably between 1 - 2% by weight,
      ∘ one or more antifoaming agents, preferably between 0.3 - 1% by weight,
      ∘ one or more inorganic fillers, preferably between 1 - 4% by weight,
         and
      ∘ one or more pigments preferably between 0.01 - 3% by weight,
      wherein the total quantity of additives is in the range of 5 - 15% by weight in the respect of the weight of the total Component A; and
b) Component B comprising an aliphatic isocyanate with an isocyanate (-NCO) content between 10 - 25%.

Using additives may modify at least one feature of the final composition. For instance, including a catalyst may generate a faster curing process, meanwhile, a thixotropic agent may be used to achieve a desired viscosity, creating a thixotropic flow behavior. Said one or more inorganic fillers may increase mechanical properties, for instance, reducing gloss or improving final appearance of the composition. This results in a significant improvement in the anti-sagging properties at the same time maintaining good leveling. The storage stability can be also improved, and the settling of pigments and fillers is prevented. Consequently, the properties of the coating composition not only may be similar to conventional coating composition, but also RET resistance is improved. Additionally, due to comprising biobased derivates, the recyclability of the product comprising said coating composition, as well as the sustainability, is also increased. As previously mentioned, sometimes, it is not possible to obtain 100% pure biobased compounds, during biobased synthesis. So, the remaining amount may be petroleum-based polycarbonate or not pure polycarbonate.

The Leading Edge Protection (LEP) coating composition obtained according to the current invention may be used in a variety of applications. Preferably, the coating composition may be used as a coating in a Leading Edge Protection system of a wind turbine blades.

In one embodiment, the biobased polycarbonate diol of component A is polycarbonate polyol of 2,2-dimethylpropane-1,3-diol.

In another embodiment, the Component A may further comprise at least 20% by weight of petroleum-based polycarbonate diol in respect of the total weight of component A. the petroleum-based polycarbonate diol of component A may be selected from polycarbonate polyol of 1,5-pentadiol, 1,6-hexanediol and an aliphatic diol mixture thereof. As previously mentioned, the use of petroleum-based polycarbonate diol may allow the adaptation of the mix ratio between the Component A and the Component B comprised in the coating composition. This feature is relevant in case that the coating composition will be applied by commercial mix gun, wherein the mix ratio is fixed.

In another embodiment, independently of the selected compound o mixture, the polycarbonate diol of component A has a molecular weight between 500-1000 g/mol.

In another embodiment, the aliphatic isocyanate of Component B can comprise a biobased isocyanate. In other words, the aliphatic isocyanate of Component B is selected from petroleum-based isocyanate, biobased isocyanate composed of more than 60% of biobased carbon content calculated according to method B (AMS) using ASTM D 6866-16, or a mixture thereof. The used of a biobased isocyanate increases the quantity of biobased material in the coating composition, improving the sustainability of said coating composition.

Consequently, the aliphatic isocyanate of component B may comprise petroleum-based isocyanate, like aliphatic ester groups containing prepolymer based on hexamethylene-1,6-diisocyanate (HDI), biobased isocyanate, preferably, aliphatic biobased pentamethylene diisocyanate (PDI) with a biobased carbon content of more than 60% calculated according to method B (AMS) using ASTM D 6866-16. In addition, the aliphatic isocyanate of component B may comprise the mixture of these compound, hexamethylene-1,6-diisocyanate (HDI) and aliphatic biobased pentamethylene diisocyanate (PDI).

In other embodiment, independently of the compound, the aliphatic isocyanate of Component B has a molecular weight between 200 - 600 g/mol.

In other embodiment, the Leading Edge Protection (LEP) coating composition may consist of the curable polyurethane material.

As previously mentioned, said Leading Edge Protection (LEP) coating composition may be used for improving the erosion resistance of substrates.

In other aspect, the invention describes a kit comprising a first cartridge or container comprising a quantity of Component A, and a second cartridge container comprising a quantity of Component B. This kit allows a user to apply the coating composition over a substrate by mixing the component A and B with a mixing gun.

Cartridge systems typically contain two components separately, which are then dispensed through a mixing nozzle that combines the materials as they are applied.

These systems offer easy application, but unfortunately not all mix ratio range can be fitted into cartridge. Nowadays, mix ratio by volume 10:1, 4:1, 2:1, 1:1 are available commercially, which leads to requirement for formulation to have one of these mix ratios in order to fit into available cartridge packaging.

Preferably, the ratio Component A:Component B by weight is in the range 100 - 100 - 100:30, and more preferably in the range 100:100 - 100:45, and even more preferably, in a mix ratio by weight equivalent to the mix ratio by volume 2:1 or 1:1.

Furthermore, a quantity of petroleum-based polycarbonate in the component A may be added in the case to use in current commercial cartridge systems, adapting the mix ratio to one commercial ratio.

In another aspect of the invention, a Leading Edge Protection (LEP) system is described. Said Leading Edge Protection system comprises the coating composition and a substrate. Particularly, the coating composition is cured, coating the substrate, and forming a layer which may be in contact with the wind. In other words, the Leading Edge Protection system comprises a layer situated over a substrate, wherein the layer comprises the coating composition previously described.

In one embodiment, the coating composition layer of the Leading Edge Protection system comprises a thickness in the range of 200 - 700 microns, preferably 400 - 600 microns, and more preferably 500 - 600 microns.

In another embodiment, the layer comprising the coating composition may have adhesion properties, according to the peeling test, higher than 1 N/mm, preferably in the range of 3 - 4 N/mm. When the value is higher better adhesion is obtained. For these Leading Edge Protection systems, it is important to show good adhesion between all layer and to make sure that material will not fail during its lifespan. However, when values are lower than 1N/mm, it is noticed that material does not provide good adhesion properties.

In another embodiment, the coating of the Leading Edge Protection comprises a speed of sound in the range of 1300 - 1700 m/s. The speed of sound is the distance travelled per unit of time by a sound wave as it propagates through an elastic medium. However, the speed of sound varies from substance to substance: typically, sound travels most slowly in gases, faster in liquids, and fastest in solids. For a Leading Edge Protection system, it is important to have similar or lower speed of sound as water (1463 m/s) to be more RET resistant and be able to resist water impact.

In another embodiment, the coating of the Leading Edge Protection comprises a glass transition temperature (T_{g}), measured by DMTA, between -5 and -20ºC, preferably in the range of -10 and -15 ºC. Leading Edge Protection material low modulus (0.5 - 4 MPa) and viscoelastic behavior enable them to dissipate shockwave and the impact energy produced by droplet impact. This essentially prevents impact pressure buildup, which results in stresses of low magnitudes inside the polymer. This contrasts with hard and rigid solids, where the impact pressure and the resulting stresses are high, and the erosion resistance is stemmed from the ability of the material to withstand these high stresses rather than dissipating them in the first place. Secondly, Leading Edge Protection materials low modulus have the ability to recover quickly from the impact of the droplet before the subsequent impact. This prevents the accumulation of stresses due to high-frequency impacts encountered in heavy rains, which leads to better RET performance.

Low T_{g} values (lower than 0ºC) can help material to withstand low temperatures and provide superior performance even in low and high temperatures. T_{g} is an important feature of polymer behavior, marking a region of dramatic changes in the physical and mechanical properties:
- Below T_{g}: Due to lack of mobility, the polymers are hard and brittle like glass.
- Above T_{g}: Due to some mobility, the polymers are soft and flexible like rubber.

So, it is important for Leading Edge Protection material provide wide range of service temperature (-40 up to 50ºC) without change of its physical and mechanical properties.

These features provide a proper coating layer to increase the RET of a wind turbine blade. Furthermore, in a preferred embodiment, the Leading Edge Protection system comprises:
- A layer with a thickness in the range of 200 - 700 microns, and more preferably 500 - 600 microns;
- adhesion properties, according to the peeling test, higher than 1 N/mm, preferably in the range of 3 - 4 N/mm;
- a speed of sound in the range of 1300 - 1700 m/s; preferably in the range of 1300-1500 m/s; and
- a glass transition temperature (T_{g}), measured by DMTA, in the range of -5 and -20 ºC, preferably in the range of -10 and -15 ºC.

In another aspect, the current invention describes a method for preparing said coating composition. According to this invention, the method comprises the steps of providing Component A and component B; and mixing the Component A and the Component B, in a ratio by weight in the range 100:100 - 100:30. In one preferred embodiment, the ratio by weight is in the range 100:100 - 100:45, and even more preferably, in a mix ratio by weight equivalent to the mix ratio by volume 2:1 or 1:1. Additionally, a method for manufacturing a leading-edge protection system may be described. Said method comprises the following steps:
- providing a curable coating composition as previously described.
- applying said curable coating composition on a substrate, and
- curing the curable coating composition at a temperature in the range of 10 - 80 ºC, obtaining a Leading Edge Protection system.

In one embodiment, the method comprises curing the curable coating composition at a high temperature, preferably in the range of 40 - 80 ºC, since the curing at high temperature accelerates the curing process compared to the curing at room temperature or low temperature.

In one embodiment of the method, the curable coating composition is applied in one layer with a thickness in the range 200 - 700 microns, preferably 500 - 600 microns, is applied to the substrate.

Additionally, according to the current solution, this curable composition may be applied on the substrate using a roller+spatula combination in one layer application. In this sense, one user can apply the curable coating composition on the substrate, spreading it with a roller and finalizing the coating with a spatula. In an alternative embodiment, robotic application can be used in the application step of the method for manufacturing a leading-edge protection system.

Finally, the invention refers to a wind turbine blade comprising said Leading Edge Protection system.

Typically, the coating of the Leading Edge Protection (LEP) system is applied on the tip side of the blade. Depending on the blade size and manufacturer the application zone can vary. Length of Leading Edge Protection can be from 40-44 m and width from 10-14 cm. Leading Edge Protection coating can be applied on substrate (glass fiber reinforced), gelcoat, epoxy or polyurethane based fillers/putties, water based or solvent based topcoats. On some occasions Leading Edge Protection coating can be overpainted with topcoat (depending on the configurations of the manufacturer of the blade).

The wind turbine blade according to the current solution may comprise the coating composition on at least a part of the outer surface, but, in contrast, the coating composition can be applied on the entire blade surface.

### EXAMPLES

The composition according to the current invention refers to a polycarbonate diol and polyisocyanate mixture, wherein said mixture is a solvent-free composition. Although the mix ratio by weight is different, one subject matter expert may notice that E1 and E2 are equivalent examples.

| | Comp. A | | | | Comp.B | Mix ratio by weight | Effect |
|---|---|---|---|---|---|---|---|
| Example | % w. | % Petroleum PC-diol | % Biobased PC-diol | % Addit. | % w. | w/w | |
| E1 | 100 | 90 | - | 10 | 100 | 100:100 | Not accep. |
| E2 | 100 | - | 90 | 10 | 100 | 100:66 | Acceptable |
| E3 | 100 | - | 90 | 10 | 100 | 100:33 | Acceptable |
| E4 | 100 | 20 | 70 | 10 | 100 | 100:100 | Acceptable |
| E5 | 100 | 35 | 55 | 10 | 100 | 100:100 | Acceptable |
| E6 | 100 | 35 | 55 | 10 | 100 | 100:50 | Acceptable |
| E7 | 100 | 80 | 10 | 10 | 100 | 100:70 | Acceptable |
| E8 | 100 | 85 | 5 | 10 | 100 | 100:100 | Not accep. |

| | | | | | | | |
|---|---|---|---|---|---|---|---|
| PC-diol - Polycarbonate diol Addit. - Additives | | | | | | | |

The column titled "additives" refers to other compounds that may be added in the coating composition if required, such us catalysts, antifoaming agents, UV filters and thixotropic agents, pigments, moisture scavengers, among others.

Examples of thixotropic agents are fumed silica after treated with an octylsilane, hydrophobic fumed silica, fumed silica after-treated with polydimethylsiloxane or equivalent. Examples of catalysts are organotin dibutyltin dilaurate catalyst, organotin catalyst, dioctyltin dicarboxylate, inorganic tin carboxylate, organic metal compound bismuth carboxylate catalyst, zinc catalysts, tertiary amines or equivalent. Examples of antifoaming agents are solutions of foam-destroying polymers and polysiloxanes, defoamers based on silicones or equivalent. Examples of moisture scavengers are bisaldimine, drying agent based on mono-oxazolidine or equivalent. Examples of UV filters are UV absorber such as liquid hydroxyphenyl-benzotriazole, liquid hindered amine light stabilizer, or equivalent. Examples of inorganic fillers are zeolite, zinc carbonate, matting agents or equivalent. Examples of pigments are titanium dioxide, pigment carbon black pigment, oxide yellow colorant, white color titanium dioxide pigment, yellow color iron oxide pigment, black pigment or equivalent.

Example E1 is a generalization of two specific embodiments, Example E1.1 and E1.2, wherein the quantity of the petroleum-based polycarbonate diol and additives was slightly modified. In this sense, the compositions according to Example E1 can be described as follows:
- Example E1.1: Petroleum-based polycarbonate diol, commercial mixture of 1,5-pentadiol + 1,6-hexanediol - molecular weight of 500 g/mol - (90.50%), catalyst (0,50%), defoamer (1,00%), UV filter (2,00%) and thixotropic agent (6,00%).
- Example E1.2: Petroleum-based polycarbonate diol, commercial mixture of 1,5-pentadiol + 1,6-hexanediol - molecular weight of 500 g/mol - (71.70%), polyalkylene carbonate diol - molecular weight of 800 g/mol (20%), catalyst (0,30%), defoamer (1,00%), UV filter (2,00%) and thixotropic agent (5,00%).

As marked in the table, said compositions are not acceptable, providing a low value according to the Rain Erosion Test.

Alternatively, in a first example of the composition according to the current invention, a component A, based on polycarbonate diol, and a component B, based on polyisocyanate, were mixed.

In particular, the composition according to the embodiment E2 was obtained by:
a) Component A: Biobased aliphatic diol: polycarbonate polyol of 2,2-dimethylpropane-1,3-diol - molecular weight of 1000 g/mol - (88,70%), catalyst (2%), defoamer (0,30%), moisture scavenger (2,00%), UV filter (2%), and thixotropic additive (5,00%)
b) Component B: Aliphatic ester groups containing prepolymer based on hexamethylene-1,6-diisocyanate (HDI) with NCO-content 10.9% and molecular weight of 561 g/mol.

Component A and Component B were mixed with a mix ratio of 100:68.

The composition according to the embodiment E3 was obtained by:
a) Component A: Biobased aliphatic diol: polycarbonate polyol of 2,2-dimethylpropane-1,3-diol - molecular weight of 1000 g/mol - (90.50%), catalyst (0.50%), defoamer (1.00%), UV filter (2.00%), and thixotropic additive (6,00%)
b) Component B: Biobased aliphatic polyisocyanate, based on pentamethylene diisocyanate - PDI-trimer, with NCO-content 21.9% and molecular weight of 222.2 g/mol.

Component A and Component B were mixed with a mix ratio of 100:35.

Both compositions, based on biobased component A, are acceptable to use as coating composition, since the erosion resistance of substrates is improved.

Additionally, Example E5 and E6 differs, mainly, on the mix ratio used to mix Component A and Component B.

Example E5 can be described as:
Component A:
   i. Petroleum-based aliphatic diol: commercial mixture of 1,5-pentadiol + 1,6-hexanediol (molecular weight of 500 g/mol). Total quantity in Component A is 32% by weight.
   ii. Biobased aliphatic diol: polycarbonate polyol of 2,2-dimethylpropane-1,3-diol, BENEBiOL^{™} NL1030S, (molecular weight of 1000 g/mol). Total quantity in Component A is 58% by weight. Biobased carbon content of this material is 54%.
   iii. Additives: catalyst (2%), antifoaming agents (1%), UV filters (2%) and thixotropic (4%) agents, moisture scavengers (1%). Total quantity in Component A is 10% by weight.
Component B:
   i . Aliphatic ester groups containing prepolymer based on hexamethylene-1,6-diisocyanate (HDI), wherein the isocyanate (-NCO) content is 10.9% and molecular weight of 561 g/mol.

The mix ratio of this formula was Component A: Component B 100:97 by weight (1:1 by volume).

The biobased material percentage in Component A is 31.32% by weight and in final formula 15.66 % by weight. The biobased carbon for polycarbonate diol was calculated according to method C14 using ASTM D6866.

In a similar way as example E5, a component A, E6 can be defined as:
Component A:
   i. Petroleum-based aliphatic diol: commercial mixture of polycarbonate polyol of 1,5-pentadiol + 1,6-hexanediol (molecular weight of 500 g/mol). Total quantity in component A is 36.20% by weight.
   ii. Biobased aliphatic diol: polycarbonate polyol of 2,2-dimethylpropane-1,3-diol, BENEBiOL^{™} NL1030S, (molecular weight of 1000 g/mol). Total quantity in Component A is 54.3% by weight. Biobased carbon content is 54%.
   iii. Additives: catalyst (0.5%), antifoaming agents (1%), UV filters (2%) and thixotropic (6%) agents. Total quantity in Component A is 9.5% by weight.
Component B:
   i . Biobased aliphatic polyisocyanate, based on pentamethylene diisocyanate - PDI-trimer, with NCO-content 21.9% and molecular weight of 222.2 g/mol. Biobased carbon content is 68%.

The mix ratio of this formula is Component A:Component B 100:48 by weight (2:1 by volume). The biobased material percentage in Component A is 36.68%, Component B is 68% and in final formula is 67.6%. The biobased carbon for polycarbonate diol was calculated according to method C14 using ASTM D6866. On the other hand, biobased carbon value in isocyanate was calculated according to method B (AMS) using ASTM D 6866-16.

Example E7 can be described as:
Component A:
   i. Petroleum-based aliphatic diol: polycarbonate polyol NL1030B. Total quantity in Component A is 80% by weight.
   ii. Biobased aliphatic diol: polycarbonate polyol of 2,2-dimethylpropane-1,3-diol, BENEBiOL^{™} NL1030S, (molecular weight of 1000 g/mol). Total quantity in Component A is 10% by weight. Biobased carbon content of this material is 54%.
   iii. Additives: catalyst (2%), antifoaming agents (1%), UV filters (2%) and thixotropic (5%) agents. Total quantity in Component A is 10% by weight.
Component B:
   i . Aliphatic ester groups containing prepolymer based on hexamethylene-1,6-diisocyanate (HDI), wherein the isocyanate (-NCO) content is 10.9% and molecular weight of 561 g/mol.

The mix ratio of this formula is Component A: Component B 100:70 by weight.

These compositions are transparent, but also could be pigmented without loss of rain erosion resistance, adding a pigment to the composition. In addition, an Example of pigmented formula:
Component A:
   i. Petroleum-based aliphatic diol: commercial mixture of polycarbonate polyol of 1,5-pentadiol + 1,6-hexanediol (molecular weight of 500 g/mol). Total quantity in component A is 38.23% by weight.
   ii. Biobased aliphatic diol: polycarbonate polyol of 2,2-dimethylpropane-1,3-diol, BENEBiOL^{™} NL1030S, (molecular weight of 1000 g/mol). Total quantity in Component A is 49.17% by weight. Biobased carbon content is 54%.
   iii. Additives: catalyst (1.5%), antifoaming agents (1%), UV filters (2%) and thixotropic (5%) agents, pigments (3.1%). Total quantity in Component A is 12.60% by weight.
Component B:
   i. Biobased aliphatic polyisocyanate, based on pentamethylene diisocyanate - PDI-trimer, with NCO-content 21.9% and molecular weight of 222.2 g/mol. Biobased carbon content is 68%.

The mix ratio of this formula is Component A:Component B 100:48 by weight (2:1 by volume).

### Example. Rain erosion resistance test (RET)

The Leading Edge Protection systems must withstand extreme conditions, and therefore testing them is essential to understand their erosion behavior and performance.

Accelerated Rain Erosion Testing (RET) of a leading-edge solution not only proves the performance of the product, but also enhances the understanding of failure modes. This test system has a proven level of repeatability and fulfills DNV's Recommended Practice (DNV-RP-0171) for testing rotor blade erosion protection systems.

DNV-RP-0171 is based on a 3-bladed helicopter principle with test specimens shaped like the leading edges of a standard blade or wing. This test setup ensures conditions very similar to real-life harsh weather in an accelerated way. In this recommended practice, onshore (ALT-RET) and offshore (HALT-RET) blade testing conditions are described. The proposed conditions are summarized in the table below:

| **Test name** | **HALT-RET*** | **ALT-RET**** |
|---|---|---|
| v _{root speed} | 100 m/s | 64 m/s |
| v _{center speed} | 130 m/s | 82 m/s |
| v _{tip speed} | 160 m/s | 100 m/s |
| Rain rate | Shall be reported | Shall be reported |
| Mean droplet diameter | 2 mm | 2 mm |

| | | |
|---|---|---|
| *HALT-RET-highly accelerated rain erosion test **ALT-RET-accelerated rain erosion test | | |

RET evaluation is visual and usually test is stopped when breakthrough is detected.

Biobased Leading Edge Protection formulations according to current invention were tested using HALT-RET, applying 65 L/h rain rate. For comparing reasons several examples are provided below:

| **Patent nr** | **RET conditions** | | **Rain erosion test duration** |
|---|---|---|---|
| US2017152398A1 | v _{root speed} | 94 m/s | Example I1=900 min |
| | v _{center speed} | 117 m/s | Example I2=1000 min |
| | v _{tip speed} | 140 m/s | Example C1=60 min |
| | Rain rate | 30L/h | Example C2=160 min |
| | RPM | 1119 rpm | |
| WO2020089296A1 | v _{root speed} | 99 m/s | Example 1=300 min |
| | v _{center speed} | 123 m/s | Example 2=600 min |
| | v _{tip speed} | 147 m/s | Example 3=960 min |
| | Rain rate | 70 L/h | Example 4=960 min |
| | RPM | 1175 rpm | Example 5=120 min |
| Example E1.1 | v _{root speed} | 108 m/s | 420 min |
| | v _{center speed} | 134 m/s | |
| | v _{tip speed} | 160 m/s | |
| | Rain rate | 65 L/h | |
| Example E1.2 | v _{root speed} | 108 m/s | 300 min |
| | v _{center speed} | 134 m/s | |
| | v _{tip speed} | 160 m/s | |
| | Rain rate | 65 L/h | |
| Example E5 | v _{root speed} | 108 m/s | 2040 min |
| | v _{center speed} | 134 m/s | |
| | v _{tip speed} | 160 m/s | |
| | Rain rate | 65 L/h | |
| | RPM | 1278 rpm | |

| | | | |
|---|---|---|---|
| RPM: Revolutions per minute | | | |

It is worth notifying that, US2017152398A1 and WO2020089296A1 were using tip speed lower compared to BIO Leading Edge Protection test, which means that the Leading Edge Protection, according to the current specification, is performing better resulting of 2040 min rain erosion test duration with harsh conditions.

Both prior art patents were using standard grade (petroleum-based) polycarbonate diols and aliphatic isocyanates for the Leading Edge Protection formulations. Surprisingly, improvement in RET resistance was detected after incorporation of biobased coating composition.

Conclusions:
- Leading Edge Protection has improved RET resistance providing longevity for the blade.
- Biobased material has improved recycling process.
- Increased longevity and recyclability of the blade improve sustainability of the system.

## Claims

1. A Leading Edge Protection (LEP) coating composition **characterized by** comprising a curable polyurethane material, wherein said polyurethane material is a solvent-free two component polyurethane material comprising:
a) Component A comprising at least 10% by weight of biobased carbon polycarbonate diol in respect of the total weight of Component A, calculated according to method C14 using ASTM D6866; and one or more additives selected from:
a. one or more thixotropic agents, preferably between 5 - 8% by weight;
b. one or more catalyst, preferably between 0.25 - 3% by weight;
c. one or more UV filter, preferably between 0.5 - 3 % by weight;
d. one or more moisture scavengers, preferably between 1 - 2% by weight;
e. one or more antifoaming agents, preferably between 0.3 - 1% by weight;
f. one or more inorganic fillers, preferably between 1 - 4% by weight; and
g. one or more pigments preferably between 0.01 - 3% by weight; wherein the total quantity of additives is in the range of 5 - 15% by weight in the respect of the weight of the total Component A; and
b) Component B comprising an aliphatic isocyanate with an isocyanate (-NCO) content between 10 - 25%.

2. The composition according to claim 1, wherein the biobased polycarbonate diol of component A is polycarbonate polyol of 2,2-dimethylpropane-1,3-diol.

3. The composition according to any one of the claims 1 - 2, wherein the component A further comprises at least 20% by weight of petroleum-based polycarbonate diol in respect of the total weight of component A.

4. The composition according to claim 3, wherein the petroleum-based polycarbonate diol of component A is selected from polycarbonate polyol of 1,5-pentadiol, 1,6-hexanediol and an aliphatic diol mixture thereof.

5. The composition according to any one of the claims 1 - 4, wherein the polycarbonate diol of component A has a molecular weight between 500 - 1000 g/mol.

6. The composition according to any one of the claims 1 - 5, wherein the aliphatic isocyanate of component B is selected from petroleum-based isocyanate, preferably, aliphatic ester groups containing prepolymer based on hexamethylene-1,6-diisocyanate (HDI); biobased isocyanate composed of more than 60% of biobased carbon content calculated according to method B (AMS) using ASTM D 6866-16, preferably, aliphatic biobased pentamethylene diisocyanate (PDI); and a mixture thereof.

7. The composition according to any one of the claims 1 - 6, wherein the aliphatic isocyanate of Component B has a molecular weight between 200 - 600 g/mol.

8. Use of a Leading Edge Protection (LEP) coating composition according to any one of the claims 1 - 7 for improving the erosion resistance of substrates.

9. A kit comprising a first container comprising a quantity of Component A according to any one of claims 1 - 7, and a second container comprising a quantity of Component B according to any one of claims 1 - 7, preferably, wherein the ratio Component A:Component B by weight is in the range 100:100 -100:30, more preferably in the range 100:100 - 100:45.

10. A Leading Edge Protection (LEP) system **characterized by** comprising a layer situated over a substrate, wherein the layer comprises a cured coating composition according to any one of the claims 1 - 7.

11. A method for preparing the coating composition according to any one of claims 1 - 7 **characterized by** comprising the following step:
- providing Component A and component B; and
- mixing Component A and Component B, in a ratio by weight in the range 100 - 100 - 100:30, preferably a ratio by weight in the range 100:100 - 100:45.

12. A method for manufacturing a leading-edge protection system **characterized by** comprising the following step:
- providing a curable coating composition according to any one of claims 1 - 7;
- applying said curable coating composition on a substrate, and
- curing the curable coating composition at a temperature in the range of 10 - 80 ºC, obtaining a Leading Edge Protection system.

13. The method for manufacturing a Leading Edge Protection system according to the claim 12, wherein the curing step is carried out at a temperature in the range of 40 - 80 ºC.

14. The method for manufacturing a Leading Edge Protection system according to any one of the claims 12 - 13, wherein the curable coating composition is applied in one layer with a thickness in the range 200 - 700 microns, preferably 500 - 600 microns, is applied to the substrate.

15. A wind turbine blade **characterized by** comprising the Leading Edge Protection system according to claim 10, on at least a part of the outer surface.
